# EUROPEAN PATENT APPLICATION

(11) **EP 4 559 758 A1**
(43) Date of publication of application: **28.05.2025**
(21) Application number: 24212139.0
(22) Date of filing: 11.11.2024
(51) Int. Cl.: B60R 11/06, B62D 43/00, B62D 43/06, B62D 43/10, B62D 43/08

(54) **IMPROVEMENTS IN RELATION TO IN-VEHICLE STORAGE ACCESS**

(30) Priority: 23.11.2023 GB 202317890
(71) Applicant: Nissan Motor Manufacturing (UK) Limited, Cranfield, Bedfordshire MK43 0DB (GB)
(72) Inventor: Barron, Peter, Cranfield, MK430DB (GB); Strachan, Ken, Cranfield, MK430DB (GB)

(57) **Abstract**

Storage assembly 7 comprises partition 8 and rigid carrier 9. The carrier has one or more items (10, Fig. 7), e.g. wheel changing tools, attached thereto. The partition has an aperture 11 (Fig. 6) to receive the carrier. A receptacle (15, Fig. 7) is attached to the carrier, which can be rotated around hinge 22 at the carrier foot from a stowed position where the carrier is aligned with the partition to an open position where the tools may be accessed. In a second embodiment, the carrier (9B, Fig. 11) may rotate in an aperture (11B, Fig. 11) in the partition 8B. Chocks (17, Fig. 8) may maintain alignment of the receptacle to the wheel well 6We, even if the tyre is flat. The assembly may be mounted in a frunk (Figs. 2a, 2b), or in a trunk (Figs. 3a, 3b).

## Description

### Technical Field of the Invention

The present invention relates to in-vehicle storage access. In particular, but not exclusively, the invention comprises an in-vehicle storage assembly allowing access to one or more items.

### Background to the Invention

Spare wheels are often kept inside road vehicles, so that in emergencies where one of the tyres of the vehicle becomes unusable, a driver, passenger or roadside assistance provider can replace the wheel with the unusable tyre with the stored spare. They are often stored with a corresponding tool kit or "jack-pack" provided within the inner well or recess of the spare wheel.

Typical road passenger vehicles have a storage space available behind the passenger compartment, commonly known as a trunk. As electric motors used in electric vehicles are typically more compact than equivalent internal combustion engines (ICEs), electric vehicles having similar layouts to ICE vehicles often have storage space available in front of the passenger compartment, which is commonly referred to as a frunk. Typically, the frunk is accessed by opening the bonnet or front closure of the vehicle. Spare wheels can be stored in the trunk or in the frunk of a vehicle. In both cases, the spare wheel may be stored in a general luggage storage area; or in a separate compartment.

Spare wheels can be bulky and cumbersome to handle, and this issue is exacerbated by the provision of heavy tool kits or "jack packs" within the inner wheel well. For spare wheels stored in frunks, one issue is that user access may be particularly awkward. For example, it may be difficult for a user to lean into the car, reach under the bonnet or front closure, release a wheel retention means, and remove or replace the spare wheel and/or the tool kit or "jack pack". The difficulty of spare wheel removal is exacerbated when the spare wheel is stored in a substantially vertical orientation, as the wheel must be lifted further for removal or replacement than a horizontally mounted spare wheel.

Embodiments of the present invention seek to at least partially overcome or alleviate these and/or other disadvantages outlined above.

### Summary of the Invention

According to a first aspect of the present invention there is provided an in-vehicle storage assembly comprising a partition and a rigid carrier; the carrier having one or more items attached thereto, which items are contained within a well of a vehicle spare wheel in a stowed position in use; the partition comprising a corresponding aperture to receive the carrier when it is in a stowed position in use; the carrier being moveable from a stowed position where the carrier is within the aperture in the partition to an open position where the one or more items may be accessed; wherein movement between the stowed position and the open position involves rotation of the carrier with respect to the partition, and passage of the carrier from a position within the spare wheel well in use to an open position.

The vehicle storage assembly according to the first aspect of the present invention is particularly advantageous as it provides a compact assembly for storing one or more items. The carrier can be moved from a stowed position in which it is hidden from a user's sight to an open position whereby the carrier and its contents are readily accessible. Not only does this provide a neater overall appearance, but it also increases the volume of available storage space for a user as the carrier only encroaches on this space when the user requires access.

The carrier may be a planar panel. In such embodiments, the planar panel comprising the carrier may comprise two opposing surfaces. The carrier may be a rectangular planar panel. The carrier may be a substantially circular and substantially planar panel. The partition may be a planar panel. In such embodiments, the planar panel comprising the partition may comprise two opposing surfaces. In some embodiments, fitting the carrier within the aperture in the partition results in one or both opposing surfaces of the carrier being flush with one or both opposing surfaces of the partition.

The partition may divide the vehicle storage assembly between a spare wheel storage compartment and a luggage storage compartment. A spare wheel may be stored in a substantially upright plane within the spare wheel storage compartment. At least one of the spare wheel or luggage storage compartments may be independently accessible, at least on an upper face thereof. At least one of the spare wheel or luggage storage compartments may be open. At least one of the spare wheel or luggage storage compartments may be closed. For example, at least one of the spare wheel or luggage storage compartments may comprise a removable and/or hinged lid.

At least one of the one or more items may be provided on the side of the carrier facing the spare wheel storage compartment. In a preferred embodiment, all of the one or more items may be provided on the side of the carrier facing the spare wheel storage compartment. An inner well of the spare wheel may be configured to receive the carrier and/or a receptacle mounted thereon and/or the one or more items when the carrier is in the stowed position. The one or more items may be shaped and/or sized to fit within the inner well of the spare wheel. The aperture may be aligned with the inner well of the spare wheel. The carrier may be aligned with the inner well of the spare wheel. The carrier may be aligned with the inner well of the spare wheel when in the stowed position. This is particularly advantageous as it enables the one or more items and the spare wheel to be stowed in a compact and space efficient manner.

The partition may be parallel to the plane of the stored spare wheel. The partition may be substantially vertical. The spare wheel may comprise a wheel matching the wheels fitted to the vehicle. In other embodiments, the spare wheel may have a narrower transverse profile than the wheels fitted to the vehicle. Such narrower wheels are commonly referred to as space savers.

The one or more items may include a tool kit. The one or more items may include a "jack pack". The one or more items may include at least one of a jack, a wheel brace and a towing eye. Storing tools attached to the carrier is particularly advantageous as when the carrier is in the open position, the tools are removed from the inner well of the spare wheel, thereby reducing the weight of the spare wheel when the user needs to remove it; and enabling the user to access the tools without having to remove the spare wheel. Furthermore, this enables the user to only remove the tools as and when they are required; which means that the working area when changing the wheel can be kept clutter free, and it is less likely that any of the individual tools become lost.

The one or more items may be removably attached to the carrier. The one or more items may be removably attached via any suitable fitting. For example, suitable fittings may include but are not limited to clips, snap fits, recesses, or magnetic means.

The one or more items may be stored in a receptacle. The receptacle may be shaped and/or sized to fit within the inner well of the spare wheel. The receptacle may be open to allow access to the one or more items stored therein. Alternatively, the receptacle may be enclosed. For example, the receptacle may be enclosed by a removable or hinged lid. This is particularly advantageous as it minimises the risk of items stored therein accidentally falling out, particularly when the carrier is being moved between the stowed and open positions. The receptacle may be releasably or fixedly attached to the carrier. In a preferred embodiment, the receptacle may be integrally formed with the carrier.

The receptacle may be provided with an insert. The insert may comprise a plurality of recesses. The plurality of recesses may each be shaped and configured to receive a specific item of the one or more items. In particular, friction between the recess and each item may be sufficient to retain the item within the recess until actively removed by a user. This is particularly advantageous as it ensures that each item is securely housed and is less likely to move around and/or fall out of the carrier when in use. The insert may be formed from plastic, foam or any other suitable material or combination of materials.

One or each of the partition and the carrier may be formed of a single piece of material. This is particularly advantageous as it minimises the number of joints and/or attachments between pieces of material; hence avoiding incorporation of points of relative weakness, which could render these parts less durable in use.

The partition may be substantially rigid. The carrier may be substantially rigid. In a preferred embodiment, both the partition and the carrier are substantially rigid. In this application, "substantially rigid" means that the component does not bend significantly under normal operating conditions. One or each of the rigid partition and/or the carrier may be formed from any suitable rigid material. Suitable materials include but are not limited to polythene or polypropylene. The skilled person will appreciate that many suitable alternative materials are available. Providing substantially rigid components is particularly advantageous as it allows the partition and carrier to bear the load of the at least one item without deforming excessively and/or being damaged.

At least a portion of one of the partition and the carrier may be reinforced. In a preferred embodiment, at least a portion of both the partition and the carrier may be reinforced. The reinforced portion of the partition may be provided around the aperture. The reinforced portion of the carrier may be provided around the one or more items attached thereto. In a preferred embodiment, both the partition and the carrier may be of sufficient strength to support the load of the one or more items attached to the carrier.

The aperture may be substantially the same shape as the carrier. The aperture may be slightly larger than the carrier. There may be a seal provided between the aperture and the carrier. The aperture may be substantially the same shape as the receptacle. The aperture may be slightly larger than the receptacle. This is particularly advantageous as it enables the carrier and/or receptacle to be easily received therethrough without the carrier and/or receptacle and the aperture coming into contact; which would make it more difficult for the user to move the carrier between the stowed and open positions. The one or more items may be positioned on the carrier in alignment with the aperture of the partition. The receptacle may be positioned on the carrier in alignment with the aperture of the partition.

The in-vehicle storage assembly may be provided in front of a passenger compartment of a vehicle. The in-vehicle storage assembly may be provided beneath a bonnet or front closure. The in-vehicle storage assembly may be provided within a frunk of the vehicle. The bonnet may be pivotably attached to a front section of the vehicle. The bonnet may be moveable between an open and a closed position. In such embodiments, the compartment suitable for storing a spare wheel may be provided proximal to the front of the vehicle. This is particularly advantageous as the spare wheel is provided close to the user when they are standing outside the vehicle, so they do not have to lean as far in to remove the spare wheel.

Additionally or alternatively, the in-vehicle storage assembly may be provided behind the passenger compartment of the vehicle. The in-vehicle storage assembly may be provided in the rear of the vehicle. The in-vehicle storage assembly may be provided in a trunk of the vehicle. In such embodiments, the in-vehicle storage assembly may be provided adjacent to an upright wall of the trunk. The in-vehicle storage assembly may be provided in a side wall of the trunk lining.

In this application, the terms front and rear are to be understood relative to a vehicle travelling in a forward direction of motion. The terms upper and lower are to be understood relative to a vehicle in its ordinary upright orientation.

The in-vehicle storage assembly may be provided with at least one wheel chock. In a preferred embodiment, the in-vehicle storage assembly may be provided with two wheel chocks. The or each wheel chock may be configured to support the spare wheel. The or each wheel chock may be provided as an upwardly projecting protrusion. The or each wheel chock may be attached to a base of the spare wheel storage compartment. Additionally or alternatively, the or each wheel chock may be provided as a horizontally projecting protrusion. In such embodiments, the or each wheel chock may be attached to a surface of the partition. In a preferred embodiment, there are provided two wheel chocks which intersect directly opposing points on opposing sides of the circumference of the spare wheel. This is particularly advantageous as it ensures that even if a flat tyre is stored, the inner well of the spare wheel remains aligned with the aperture and/or the carrier such that the carrier may still be easily received within the inner well.

The carrier may comprise a handle. The handle may facilitate rotation of the carrier. The handle may be provided on the side of the carrier opposing the at least one item. The handle may be provided on the side of the carrier adjacent to the compartment suitable for storing luggage. The handle may be provided in any suitable form and position. For example, the handle may be a bar, "T"-shaped, or a rounded handle. The handle may assist the user in moving the carrier between the stowed and open positions.

In one preferred embodiment, the carrier may comprise a substantially rectangular planar surface. The carrier may be hingedly connected to the partition. The carrier may be hingedly connected to a lower edge of the partition. The hinged connection may allow rotation of the carrier relative to the partition.

The in-vehicle storage assembly may comprise a release mechanism. The release mechanism may comprise at least one edge catch. The at least one edge catch may be provided adjacent to an upper edge of the carrier. The at least one edge catch may protrude perpendicularly from the carrier. The at least one edge catch may protrude in the same plane as the carrier. The at least one edge catch may be configured to be releasably housed in at least one corresponding receiving portion. The at least one corresponding receiving portion may be provided adjacent to an upper edge of the partition. In a preferred embodiment, there are provided two edge catches and two corresponding receiving portions. In use, when the carrier is in the stowed position, the two edge catches are housed in the corresponding receiving portions; and the carrier is thereby secured in the stowed position. The two edge catches may be released from the corresponding receiving portions to allow the carrier to be rotated into the open position.

The release mechanism may further comprise a spring-loaded button. The spring-loaded button may be provided adjacent to an upper edge of the carrier. The spring-loaded button may be depressed in use to release the at least one edge catch. Provision of a spring-loaded button is particularly advantageous as it directs the user toward the release mechanism, thereby improving ease of use for the user.

The release mechanism may further comprise an engagement element. The engagement element may comprise a clamp adapted to engage with the inner wall of the spare wheel. The receptacle on the carrier may comprise a recess configured to give clearance to the clamp. The clamp may have a curved profile conforming with the profile of the wheel wall.

The release mechanism may comprise a rod. The rod may be slidingly mounted to the carrier. The spring-loaded button and the engagement element may be attached to the rod. In use, depression of the button releases the at least one edge catch and depresses the engagement element, thereby releasing the engagement element from the wheel wall; and enabling the carrier to move from the stowed position to the open position.

Alternatively, the carrier may comprise a planar disc and the aperture may have a corresponding profile. The carrier and the partition surrounding the aperture may be provided with complementary interlockable elements. The interlockable elements may comprise projecting tabs and cutouts. In one embodiment, the tabs are provided on the carrier and the cut outs are provided on the partition. In another embodiment, the tabs are provided on the partition and the cut outs are provided on the carrier. The shape and positioning of the cutouts may correspond to the shape and positioning of the tabs. The cutouts may be circumferntially offset from the tabs when the carrier is in the stowed position. Rotation of the carrier may allow the tabs to align with the cutouts, thereby facilitating removal of the carrier from the partition; and allowing access to the one or more items attached to the carrier.

Alternatively, the carrier may comprise a threaded outer edge. In such embodiments, the partition surrounding the aperture may comprise a corresponding thread.

The carrier may be provided in a contrasting colour to the rest of the in-vehicle storage assembly. This is particularly advantageous in directing the user to the carrier in order to rotate the carrier, and hence to allow access to the one or more items carried thereon.

According to a second aspect of the present invention there is provided a vehicle comprising the in-vehicle storage assembly of the first aspect of the invention.

The vehicle of the second aspect of the present invention may comprise any of the optional features of the first aspect of the present invention.

The vehicle may be an electric vehicle. The vehicle may comprise a spare wheel stored in at least one of the frunk or the trunk. The plane of the spare wheel may be substantially upright.

### Detailed Description of the Invention

In order that the invention may be more clearly understood one or more embodiments thereof will now be described, by way of example only, with reference to the accompanying drawings, of which:
- Figure 1: is a view of a vehicle of the present invention schematically illustrating the position of a frunk and a trunk;
- Figure 2a: is a view of the vehicle of Figure 1 schematically illustrating the position of the frunk and the position of a spare wheel within the frunk;
- Figure 2b: is a side view of the front portion of the vehicle of Figures 1 and 2a schematically illustrating a first position of an in-vehicle storage assembly within the frunk;
- Figure 3a: is a side view of the rear portion of a vehicle schematically illustrating the position of the spare wheel within its trunk;
- Figure 3b: is a rear view of the rear portion of the vehicle of Figure 3a schematically illustrating a second position of the vehicle storage assembly within the trunk;
- Figure 4a: comprises perspective and cross-sectional views of a spare wheel made of pressed steel;
- Figure 4b: comprises perspective and cross-sectional views of a spare wheel made of aluminium alloy;
- Figure 5: is a view of an in-vehicle storage assembly according to a first embodiment of the present invention, with the carrier in the stowed position;
- Figure 6: is a view of the carrier of the in-vehicle storage assembly of Figure 5 in its open position;
- Figure 7: is a front view of the carrier of the in-vehicle storage assembly of Figures 5 and 6 along arrow VII in Figure 6 (that is, from the front of the vehicle) with one or more items attached;
- Figure 8: is a front view of the spare wheel supported on two wheel chocks;
- Figure 9: is a front view of the release mechanism of the in-vehicle storage assembly of Figures 5-7;
- Figure 10: is a front view of the receptacle on the carrier, showing a clearance slot for a wheel engagement element; and
- Figure 11: is a rear view of a second embodiment of an in-vehicle storage assembly according to the present invention.

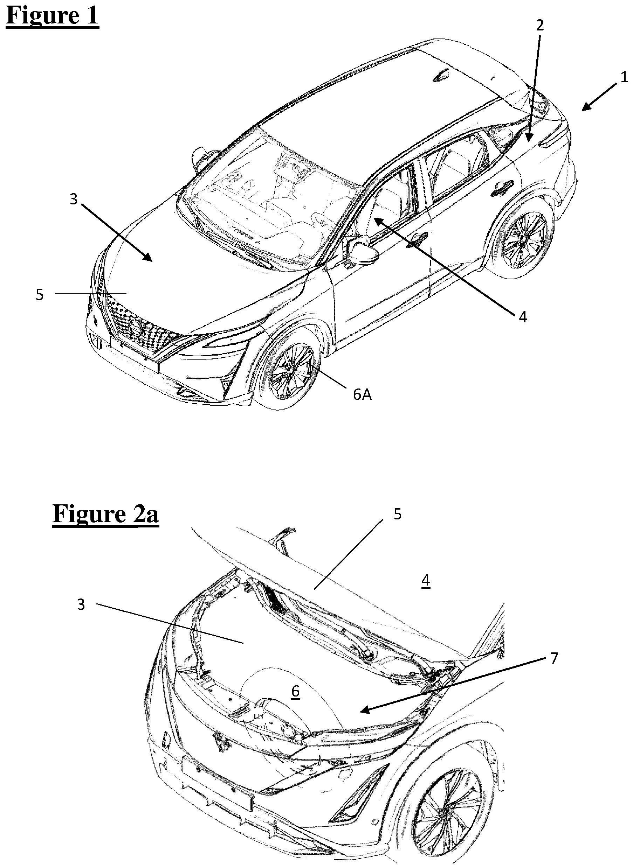

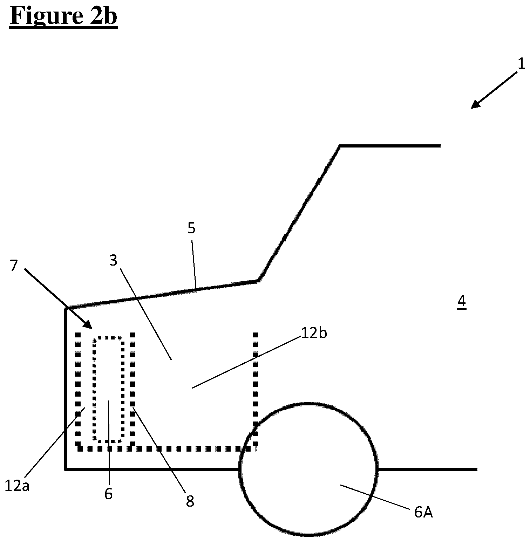

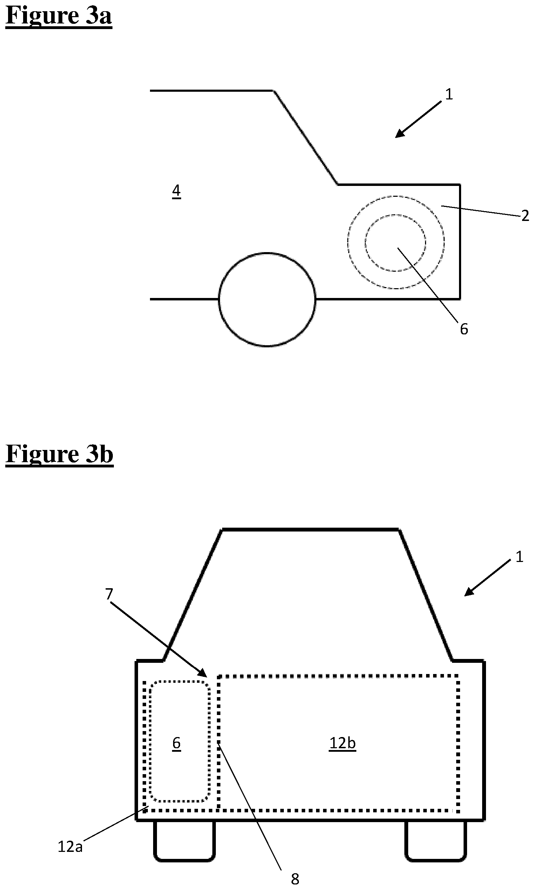

Figure 1 shows a vehicle 1 comprising a frunk 3 and a trunk 2. With additional reference to Figures 2a and 2b, the frunk 3 is provided in front of a passenger compartment 4 of the vehicle 1 beneath a bonnet or front closure 5. The frunk 3 is provided with an in-vehicle storage assembly 7 in a first position having space to store both luggage and a spare wheel 6. In this particular embodiment, the vehicle 1 is an electric vehicle; but it will be understood that the invention may also be used in traditional ICE vehicles. With reference to Figures 3a and 3b, the in-vehicle storage assembly 6 is shown in a second position in the trunk 2 of a vehicle 1 (which in this Figure, is a sedan) behind the passenger compartment 4. In this case, the in-vehicle storage assembly is mounted adjacent to a side wall 8 of the trunk 7; and comprises a spare wheel storage compartment 12a and a luggage storage compartment 12b.

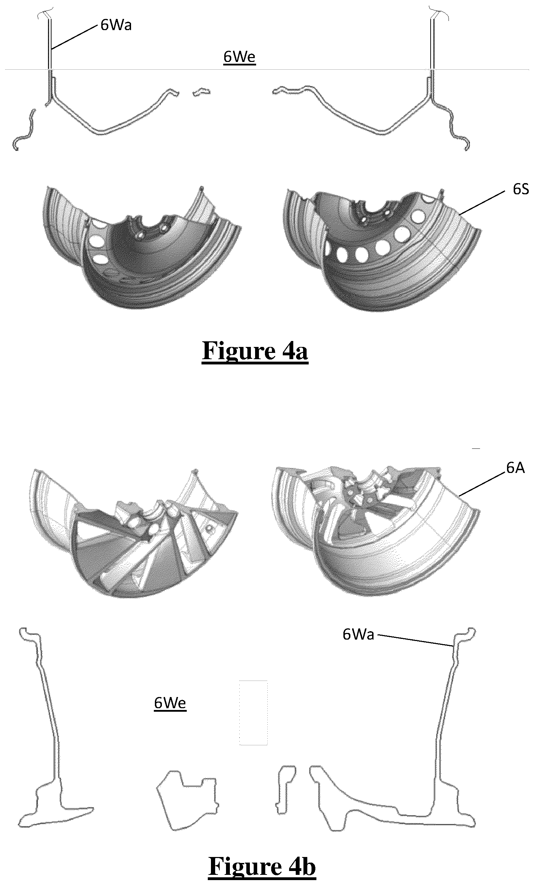

Figures 4a and 4b show spare wheels 6S and 6A made of pressed steel and of aluminium alloy respectively. In each case, the well area 6We provides a space in which to store a wheel changing tool kit when the spare wheel is stored within the trunk or frunk; while the inner wall 6Wa provides a surface against which an engagement element can be placed when the wheel is stored in a substantially upright position, as will be explained below.

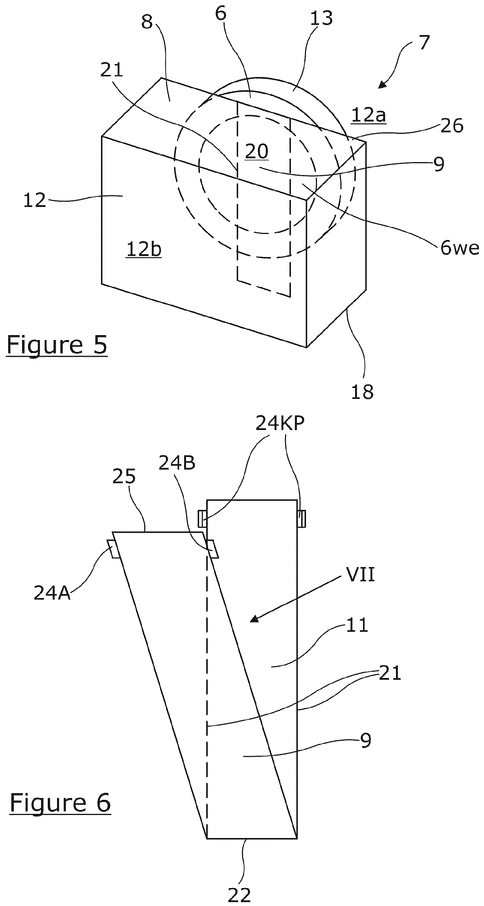

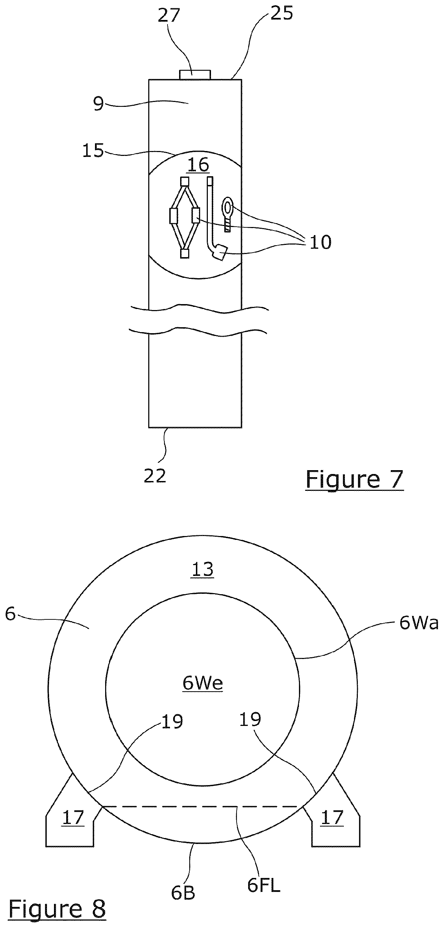

With reference now to Figures 5 to 7, the in-vehicle storage assembly 7 is shown. The in-vehicle storage assembly 7 comprises a partition 8, which may comprise a front wall of a frunk liner 18, and a rigid carrier 9. The rigid carrier 9 has one or more items 10 (Fig. 7 - which would usually be tools used for changing wheels) attached thereto, and the partition 8 comprises a corresponding aperture 11 to receive the carrier 9. The carrier 9 is moveable between a stowed position seen best in Figure 5, and an open position as seen in Figure 6 by rotation of the carrier 9 with respect to the partition 8. In the stowed position, the carrier 9 is fitted within the aperture 11 in the partition 8, and in the open position the one or more items 10 may be accessed by a user as the carrier 9 is spaced apart from the partition 8. Optionally, the carrier 9 may be fitted flush with the partition 8 in the stowed position.

In this particular embodiment, the carrier 9 is a rectangular planar panel, and the partition 8 is also a planar panel. However, it will be understood that the carrier may have a different shape and does not have to be planar. For example, the carrier 9 may be square or circular. However, the use of a rectangular carrier 9 makes it easy to extract tools 10, because they rotate out of the spare wheel recess in a shallow arc due to the long radius arm from hinge 22 at the base of the partition 8. Both the carrier 9 and partition 8 are formed from a substantially rigid material which does not bend under normal operating conditions and can bear the load of the one or more items 10 with ease. In this particular embodiment both the carrier 9 and the partition may be made from polythene, polypropylene, or ABS (Acrylonitrile Butadiene Styrene). The carrier and partition may be made from different grades of material to allow the carrier to be stiffer than the partition, for example; or from the same grade to simplify recycling.

In the embodiment shown in Figures 5 to 7, the partition 8 (of which some hidden detail is omitted from Figure 5 for clarity) is provided between a spare wheel storage compartment 12a and a luggage storage compartment 12b; and the partition 8 acts as a dividing wall therebetween. In this particular embodiment, the spare wheel 6 is provided in a substantially upright plane within the spare wheel storage compartment 12a, in parallel with partition 8 which is also provided in a substantially upright plane. The spare wheel 6 is fitted with a tyre 13, and the spare wheel 6 may match the alloy wheels 6A provided on the vehicle 1 as shown in Figures 1 and 4b; but a "space saver" steel spare wheel is shown in Figures 2a and 4a. In this embodiment, both the spare wheel and luggage storage compartments 12a, 12b are independently accessible such that a user may access the contents of the spare wheel storage compartment 12a and the luggage storage compartment 12b without having to access both storage compartments 12a, 12b simultaneously. Both the spare wheel and luggage storage compartments 12a, 12b are open although it will be understood that one or each storage compartment 12a, 12b may be closed, for example, by a removable lid.

The in-vehicle storage assembly 7 is provided in the frunk 3 of the vehicle 1 and the spare wheel storage compartment 12a is provided proximal to the front of the vehicle 1. This is particularly advantageous as the spare wheel 6 may be provided close to the user so they do not have to lean as far in to remove the wheel 6 as they would if the spare wheel was further back in the front of the vehicle; thereby improving ease of access. In alternative embodiments, the in-vehicle storage assembly 7 may be provided in the trunk 2 of the vehicle 1, and in particular, adjacent to an upright wall of the trunk 2 such as, for example, in a side wall 8 of the trunk lining (see Figure 3b).

With particular reference to Figure 7, the one or more items 10 comprise the different parts of a tool kit such as a jack, a wheel brace and/or a towing eye, which can be accessed by the user and/or a roadside assistant if a wheel 6A of the vehicle 1 requires changing. The carrier 9 is provided with a receptacle 15 having a foam insert 16 within which a plurality of recesses are provided to securely house the specific components of the tool kit until such time as they are required by the user. The receptacle in this embodiment is integrally formed with the carrier 9; although it will be understood that the receptacle 15 may be releasably attached to the carrier 9 instead, via any suitable fitting. Alternatively, a receptacle 15 may not be provided and instead, the one or more items 10 may be removably attached to the carrier 9 via any suitable fitting such as clips, snap fits, recesses, or magnetic means.

With reference again to Figures 5 to 7, the in-vehicle storage assembly 7 is formed such that the aperture 11 of the partition 8 and the carrier 9 are aligned with an inner well 6We of the spare wheel 6 (Figs. 4a and 4b) when the in-vehicle storage assembly 7 is in the stowed position. A receptacle (15, Fig. 7) is provided on the side of the carrier 9 adjacent to the first storage compartment 12a suitable for storing the spare wheel 6. The inner well 6We of the spare wheel 6 is configured to receive receptacle 15 when carrier 9 is in the stowed position. In this particular embodiment, the receptacle 15 is open although it will be understood that a removable lid may also be provided to enclose the stored items 10.

Both tool kits and spare wheels 6 are often heavy and can be cumbersome to move. By providing the tool kit in the receptacle 15, it is possible to store it neatly away within the inner well 6We of the spare wheel 6 when it is not needed; and the carrier 9 is in the stowed position. However, when access to the tool kit and/or the spare wheel 6 is required, the carrier 9 can be moved to the open position whereby the tool kit is removed from the inner well 6We of the wheel 6. This allows a user to individually access the tool kit and/or the spare wheel without having to remove both items simultaneously (for example, to remove the spare wheel from the vehicle at a tyre centre to replace a damaged tyre). This has the dual benefit of reducing the weight of the spare wheel 6 making it easier to handle and remove from the storage compartment 12a, and allowing the user to only remove the tools as and when they are required; which helps to maintain a tidy working area when changing a wheel 6.

In this particular embodiment, the entire surface of the partition 8 and carrier 9 are reinforced such that they are of sufficient strength and resilience to support the load of the carrier 9 and the one or more items 10 in use. In alternative embodiments, only a portion of the partition 8 and/or carrier 9 may be reinforced. For example, a portion of the carrier 9 may be reinforced around the one or more items 10 attached thereto, and the partition 8 may be reinforced around the aperture 11.

With reference to Figure 8, the spare wheel storage compartment 12a may be provided with two wheel chocks 17 configured to support the spare wheel 6 in position. Each wheel chock is an upwardly projecting protrusion attached to a base of the spare wheel storage compartment 12a. Of course, in certain embodiments, the base of the trunk 2 or frunk 3 may form the base of the spare wheel storage compartment 12a; and the wheel chocks 17 may be attached accordingly. Alternatively, the or each wheel chock 17 may be provided as a horizontally projecting protrusion attached to the partition 8. When a spare wheel 6 is provided in the spare wheel storage compartment 12a, the two wheel chocks 17 intersect directly opposing points on the circumference of the spare wheel 6. Each chock 17 is shaped to receive a section of the circumference of the wheel 6 by provision of a concave face 19. In some embodiments, the concave face 19 may be provided with a gripping surface which assists in retaining the spare wheel 6 in place. Regardless of whether the wheel 6 housed in the spare wheel storage compartment 12a has a fully inflated or flat tyre 13, the wheel chocks 17 ensure that the inner well 6We remains aligned with the aperture 11 of the partition 8, and the receptacle 15 on carrier 9, by intersecting the wheel 6 at a point approximately one fifth of the height of the wheel 6 from the lowest point 6B of the wheel 6 when positioned in the spare wheel storage compartment 12a. Numeral 6FL denotes a typical profile of a flat tyre.

With reference to Figures 5 to 7 and 9 to 10, a first embodiment of the invention is shown. The carrier 9 has a substantially rectangular planar surface 20 and the aperture 11 of the partition 8 is substantially the same shape as the carrier 9 such that when the carrier is in the stowed position, the aperture 11 is closed by the carrier 9. The carrier 9 extends the full height of the partition 8, and is hingedly connected to a lower edge 22 of the partition by at least one hinge (not shown) which allows rotation of the carrier 9 relative to the partition 8. Of course, in alternative embodiments, the carrier may not extend the full height of the partition 8; and may instead be hingedly connected to any point on the surface of the partition 8. The aperture 11 is slightly larger than the receptacle 15 such that the receptacle is easily received therethrough without being unduly restricted by contacting any edges 21 of the aperture 11 when moving between the stowed and open positions. In some embodiments, there may be a seal (not shown) provided between the aperture 11 and the carrier 9.

As best seen in Figures 6, 7, 9, and 10, the in-vehicle storage assembly 7 comprises a release mechanism 23 comprising two edge catches 24A, 24B. Each edge catch 24 is provided as a perpendicular protrusion in the plane of the carrier 9, extending from the left-hand side and the right-hand side of an upper edge 25 of the carrier 9. An upper edge 26 of the partition comprises two corresponding receiving portions or keepers 24KP, which project forward from partition 8; and within which each edge catch 24 may be releasably housed to secure the carrier 9 in the stowed position. Upon release of the edge catches 24 from the receiving portions, the carrier 9 may be rotated into the open position.

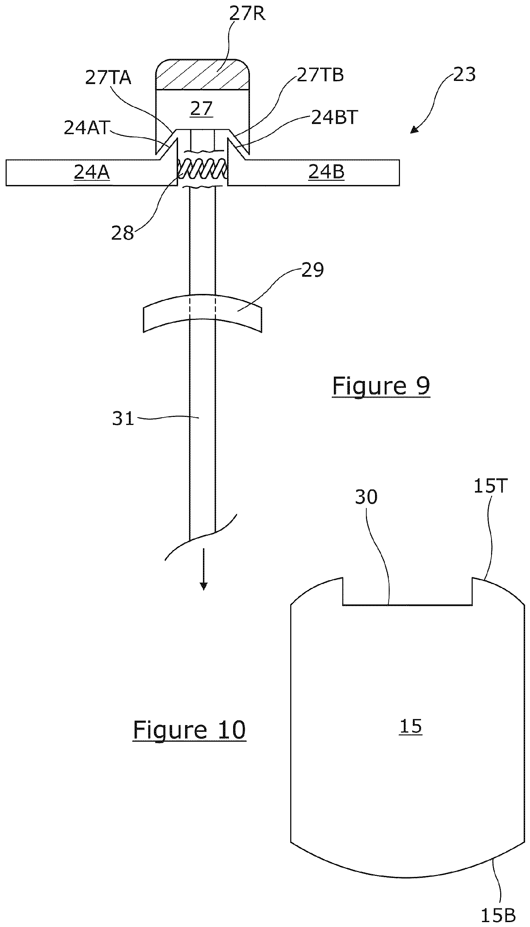

The release mechanism 23 (Fig. 9; not shown in Figure 6 for clarity) also comprises a spring-loaded button 27 positioned on an upper edge (25, Fig. 7) of the carrier where it may be easily accessible for a user to operate it when they need to access the tool kit and/or the spare wheel 6. The spring-loaded button 27 may be depressed to compress a spring element (not shown) at the base of rod 31 in use to release the edge catches 24 from their respective keepers 24KP. This is achieved by tapered sections 27TA and 27TB on the lower side of button 27 interacting with corresponding tapered sections 24AT and 24BT on lateral arms 24A and 24B. These arms are driven horizontally inwards against return spring 28 to release edge catches 24 from their keepers (24KP) on partition 8. A rubber cushion 27R is shown fitted to the top of button 27 to make the button more comfortable to operate than a hard plastic or metal button would be.

The release mechanism 23 may also comprise a wheel engagement element 29 in the form of a clamp having a curved profile. This clamp is designed to engage with the inner wall 6Wa of the rim of spare wheel 6 to hold the wheel in place securely. Receptacle 15 may comprise a slot 30 which is shaped and sized to clear the engagement element 29 in use. When the carrier 9 is in the stowed position, an upper surface of the engagement element comes into direct contact with the inner wall 6Wa of the wheel 6, thereby assisting in holding both wheel 6 and carrier 9 in their stowed positions. In this particular embodiment, a rod 31 is slidingly mounted to the carrier 9. The spring-loaded button 27 is provided at an upper end of the rod 31, and the wheel engagement element 29 is provided on the rod 31 in the slot 30 on the tool carrier receptacle 15. When the spring-loaded button 27 is depressed, the upper surface of the wheel engagement element 29 disengages with the inner wall 6Wa of the wheel 6; and moves downward so that it is no longer in contact with the wheel 6; and can be removed freely from within the wheel well 6We as the carrier 9 moves from the stowed position to the open position. Although in this particular embodiment the rod 31 is slidingly mounted to the carrier 9, in alternative embodiments, the rod 31 may form the carrier 9 and receptacle 15 and items 10 may be attached thereto. In this case, curved surfaces 15T and 15B would have to have greater clearances from the spare wheel 6 to allow for vertical movement.

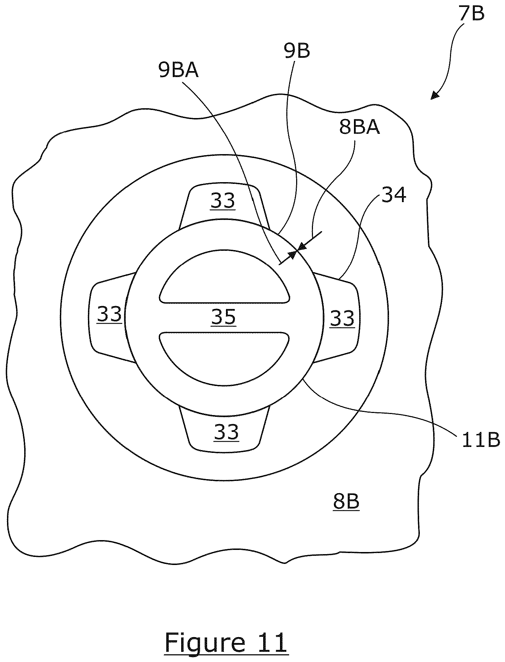

With reference now to Figure 11, a second embodiment of the invention is shown. The in-vehicle storage assembly 7B of the second embodiment includes many of the same features as the first embodiment. Like features are given like reference numerals and the detailed description focuses on the differences in the second embodiment. In this embodiment, the carrier 9B comprises a planar disc and the aperture 11B has a corresponding profile. The carrier 9B and the partition 8B surrounding the aperture 11B are provided with interlockable elements in the form of projecting tabs 33 and cutouts 34. In this particular embodiment, the carrier 9B is provided with four substantially trapezoidal tabs 33 evenly distributed around an outer circumference of the carrier 9B. However, it will be understood that a greater or lesser number of tabs 33 may be provided; and that said tabs 33 may have differing shapes and/or sizes.

The aperture 11B in partition 8B has a shape substantially the same as that of the planar disc and further comprises four cutouts 34 provided around the circumference each having a substantially trapezoidal shape, corresponding to that of each of the tabs 33. The shape and positioning of the cutouts 34 corresponds to the shape and positioning of the tabs 33 surrounding the carrier 9B such that the carrier 9B may be aligned with the aperture 11B to allow it to be received therethrough. When the carrier 9B is in the stowed position, the tabs 33 may be angularly offset from the cutouts 34 such that they do not overlap, thereby securing the carrier in the stowed position. When the user wishes to gain access to the wheel 6 and/or the one or more items 10, the carrier 9B may be rotated such that the tabs 33 move into alignment with the cutouts 34, enabling the user to remove the carrier 9B from the partition 8B. A handle 35 is provided to facilitate rotation of the carrier 9B. In this particular embodiment, the handle 35 is provided as a raised bar positioned centrally on the side of the carrier 9B opposing the one or more items 10 such that a user may grip it with their fingers. However, it shall be understood that there are many suitable forms of handle which may be used such as "T-shaped" or rounded. It will be appreciated that keepers will be required on partition 8B to hold tabs 33 in place when carrier 9B is stowed; but these are not shown in Figure 11 for clarity.

Indications may be provided around the aperture 11B of the partition 8B to illustrate to a user how far the carrier 9B must be rotated to move between the stowed and open positions. Indications may be in the form of shapes such as arrows or any other suitable form. For example, arrow 8BA on partition 8B could be aligned with arrow 9BA on carrier 9B to release the carrier from the partition. To aid visibility, arrows 8BA and 9BA could be moulded or painted in red on a white carrier 9B fitted to a dark grey or black partition 8B.

In alternative embodiments, the carrier 9B may comprise a "male" threaded outer edge; while the partition 8B surrounding the aperture 11B may comprise a corresponding "female" thread. When in the stowed position, the interaction between the threaded surfaces is sufficient to secure the carrier 9B in position fitted within the aperture 11B in the partition 8B. When access to the one or more items 10 is required, the carrier 9B may be rotated relative to the partition to "unstow" it, thereby moving the carrier 9B into the open position. When access to the one or more items 10 is no longer required, the carrier can be "stowed" back into the aperture 11B and secured in the stowed position. Optionally, the carrier 9B may be fitted flush with the partition 8B in the stowed position.

The one or more embodiments are described above by way of example only. Many variations are possible without departing from the scope of protection afforded by the appended claims.

## Claims

1. An in-vehicle storage assembly (7) comprising a partition (8) and a rigid carrier (9);
the carrier having one or more items (10) attached thereto, which items are contained within a well (6We) of a vehicle spare wheel (6) in a stowed position in use;
the partition (8) comprising a corresponding aperture (11) to receive the carrier (9) when it is in a stowed position in use;
the carrier being moveable from a stowed position where the carrier (9) is within the aperture (11) in the partition (8), to an open position where the one or more items (10) may be accessed;
wherein movement between the stowed position and the open position involves rotation of the carrier (9) with respect to the partition (8), and passage of the carrier from a position within the spare wheel well (6We) in use to an open position.

2. The in-vehicle storage assembly (7) of claim 1, wherein the partition (8) divides the in-vehicle storage assembly between a spare wheel storage compartment (12a) and a luggage storage compartment (12b); and wherein a spare wheel (6) may be stored in a substantially upright plane within the spare wheel storage compartment.

3. The in-vehicle storage assembly (7) of claim 2, wherein an inner well (6We) of the spare wheel is configured to receive the carrier (9) and/or the one or more items (10) when the carrier is in the stowed position.

4. The in-vehicle storage assembly (7) of claim 3, wherein the aperture (11) is aligned with the inner well (6We) of the spare wheel.

5. The in-vehicle storage assembly (7) of claim 3 or claim 4, wherein the carrier (9) is aligned with the inner well (6We) of the spare wheel.

6. The in-vehicle storage assembly (7) of any preceding claim, wherein the one or more items (10) include(s) a tool kit.

7. The in-vehicle storage assembly (7) of any preceding claim, wherein the in-vehicle storage assembly is provided within at least one of a frunk (3) of the vehicle or a trunk (2) of the vehicle (1).

8. The in-vehicle storage assembly (7) of any preceding claim, wherein the in-vehicle storage assembly is provided with at least one wheel chock (17); the or each wheel chock being provided as an upwardly projecting protrusion attached to a base of the spare wheel storage compartment (12a).

9. The in-vehicle storage assembly (7) of claim 8, wherein the in-vehicle storage assembly is provided with two wheel chocks (17) which intersect directly opposing points on opposing sides of the circumference of the spare wheel (6).

10. The in-vehicle storage assembly (7) of any preceding claim, wherein the carrier (9) comprises a substantially rectangular planar surface (20), and is hingedly connected to the partition (8).

11. The in-vehicle storage assembly (7) of claim 10, further comprising a release mechanism (23) attached to the carrier (9) which comprises at least one edge catch configured to be releasably housed in at least one corresponding receiving portion provided on an upper edge of the partition (8).

12. The in-vehicle storage assembly (7) of claim 11, wherein the release mechanism (23) comprises a spring-loaded button (27) provided on an upper edge of the carrier (9).

13. The in-vehicle storage assembly (7) of claim 12, wherein the release mechanism (23) further comprises a wheel engagement element (29); and wherein a rod (31) is slidingly mounted to the carrier (9); and wherein the spring-loaded button (27) and the wheel engagement element (29) are attached to the rod.

14. The in-vehicle storage assembly (7) of claim 13; wherein the wheel engagement element (29) comprises a clamp adapted to engage with the inner wall (6Wa) of the spare wheel (6), and a receptacle (15) is provided on the carrier (9); said receptacle comprising a slot (30) configured to give clearance to the clamp.

15. The in-vehicle storage assembly (7) of any of claims 1 to 9, wherein the carrier (9B) comprises a substantially planar disc and the aperture (11B) has a corresponding profile.

16. The in-vehicle storage assembly (7) of claim 15, wherein the carrier (9B) and the partition (8B) surrounding the aperture (11B) are provided with complementary interlockable elements which comprise projecting tabs (33) and cutouts (34); and wherein the tabs (33) are provided on the carrier (9B), and the cut outs (34) are provided on the partition (8B).
